(19) Europäisches Patentamt
European Patent Office
Office européen des brevets

(11) **EP 2 606 345 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(21) Anmeldenummer: **11741205.6**

(22) Anmeldetag: **04.08.2011**

(51) Int Cl.:
*G01N 30/00* (2006.01)    *G01N 1/00* (2006.01)
*G01F 23/20* (2006.01)

(86) Internationale Anmeldenummer:
**PCT/EP2011/063419**

(87) Internationale Veröffentlichungsnummer:
**WO 2012/022620 (23.02.2012 Gazette 2012/08)**

(54) **VERFAHREN UND VORRICHTUNG ZUR VERSORGUNG VON ANALYSEGERÄTEN UND LIQUID HANDLING SYSTEMEN MIT FLÜSSIGKEITEN**

METHOD AND DEVICE FOR SUPPLYING LIQUIDS TO ANALYSIS UNITS AND LIQUID HANDLING SYSTEMS

PROCÉDÉ ET DISPOSITIF D'ALIMENTATION D'APPAREILS D'ANALYSE ET DE SYSTÈMES DE MANUTENTION DE LIQUIDES AVEC DES LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2010 EP 10173023**

(43) Veröffentlichungstag der Anmeldung:
**26.06.2013 Patentblatt 2013/26**

(73) Patentinhaber:
• **Grünenthal GmbH**
**52078 Aachen (DE)**
• **Nevolab GmbH**
**88167 Maierhöfen (DE)**

(72) Erfinder:
• **FUHR, Martin**
**47918 Tönisvorst (DE)**

• **OBERBÖRSCH, Stefan**
**52078 Aachen (DE)**
• **METZGER, Martin**
**88316 Isny (DE)**
• **LORENZ, Manfred**
**72074 Tübingen (DE)**

(74) Vertreter: **Jostarndt, Hans-Dieter**
**Jostarndt Patentanwalts-AG**
**Brüsseler Ring 51**
**52074 Aachen (DE)**

(56) Entgegenhaltungen:
**EP-A1- 1 376 121       EP-A2- 1 710 004**
**WO-A2-01/51920       DE-A1-102007 058 718**
**US-A- 4 994 180**

**Beschreibung**

Die Erfindung betrifft ein Verfahren zur Versorgung von Analysegeräten und Liquid Handling Systemen mit Flüssigkeiten, die in Vorratsbehältern bereitgestellt werden.

Die Erfindung betrifft ferner eine Vorrichtung zur Durchführung eines solchen Verfahrens.

Analysegeräte, die mit Flüssigkeiten arbeiten, sind beispielsweise Säulen-Chromatographen, deren Funktionsweise auf dem Verfahren der Chromatographie basiert. Das Chromatographie-Verfahren ist insbesondere in der Chemie verbreitet und ermöglicht eine Auftrennung von Stoffgemischen durch eine unterschiedliche Verteilung ihrer Einzelbestandteile zwischen einer stationären und einer mobilen Phase. Verwendung findet das Chromatographie-Verfahren beispielsweise zum Isolieren und Reinigen von Substanzen sowie zum Analysieren stofflicher und mengenmäßiger Zusammensetzungen von Stoffgemischen.

Voraussetzung für die Durchführung eines Chromatographie-Verfahrens ist das Vorliegen einer stationären und einer mobilen Phase. Die stationäre Phase geht mit den Einzelbestandteilen des Stoffgemisches Wechselwirkungen ein, die eine Auftrennung des Stoffgemischs in seine Einzelbestandteile zur Folge haben. Daher wird häufig auch die Bezeichnung Trennstrecke für die sich nicht bewegende stationäre Phase verwendet. Das zu verarbeitende Stoffgemisch wird allerdings in die mobile Phase eingebracht, die sich zum Auftrennen zusammen mit dem Stoffgemisch durch die stationäre Phase hindurch bewegt.

Bei der Säulen-Chromatographie ist die stationäre Phase üblicherweise fest und wird auch als Sorbens oder Sorptionsmittel bezeichnet. Bekannte Sorptionsmittel sind beispielsweise Silikagele oder Polymere. Die mobile Phase hingegen ist bei der Säulen-Chromatographie üblicherweise flüssig und wird auch als Eluent oder Elutionsmittel bezeichnet. Als Elutionsmittel kommen in Abhängigkeit von den zu analysierenden Stoffgemischen verschiedene Lösungsmittel zur Anwendung.

Elutionsmittel sind üblicherweise leicht brennbare und teilweise auch giftige Gefahrstoffe, die mit Luft eine explosionsfähige Atmosphäre bilden können und die deshalb vorschriftsmäßig, entsprechend den Anforderungen des Chemikaliengesetzes, in Sicherheitsschränken zu lagern sind. Diese Sicherheitsschränke gewährleisten nicht nur eine sichere Lagerung, sondern verhindern auch das Austreten von Dämpfen in die Umgebung.

Eines der am häufigsten verwendeten Spezialverfahren der Säulen-Chromatographie ist die Hochleistungs-Chromatographie (engl. High Performance Liquid Chromatography - HPLC) als eine Form der Flüssigkeits-Chromatographie (engl. Liquid Chromatography - LC). Bei der Hochleistungs-Chromatographie kommen hohle Röhren als Trenn- oder auch Chromatographie-Säulen zum Einsatz, die mit der stationären Phase gefüllt sind und durch die das Elutionsmittel als mobile Phase hindurch geleitet wird. Die nach der Trennung aus der Trennsäule fließende Lösung wird als Eluat bezeichnet, das einem nachfolgenden Detektionssystem zur Analyse zugeführt wird.

Eine Weiterentwicklung der Hochleistungs-Chromatographie ist die Ultra Hochleistungs-Chromatographie (engl. Ultra High Performance Liquid Chromatography-UHPLC), die eine gegenüber der Hochleistungs-Chromatographie stark gesteigerte Leistung aufweist und ebenfalls mit Trennsäulen arbeitet.

Zum Auftrennen eines Stoffgemischs in seine Einzelbestandteile wird bei der Hochleistungs-Chromatographie das Elutionsmittel üblicherweise durch die Trennsäule hindurch gepumpt. Dafür sind Versorgungssysteme mit HPLC-Pumpen bekannt. Auf der Niederdruckseite dieser HPLC-Pumpen wird das Elutionsmittel aus einem üblicherweise oberhalb der HPLC-Pumpen angeordneten Vorratsbehälter entnommen und auf der Hochdruckseite der HPLC-Pumpen erfolgt dann die Förderung des Elutionsmittels durch die Trennsäule. Dafür steht das Elutionsmittel in dem Vorratsbehälter drucklos zur Verfügung.

Die bekannten Versorgungssysteme weisen jedoch verschiedene Nachteile auf. Einerseits sind bei diesen Versorgungssystemen mit der Lagerung des Elutionsmittels zum Teil Sicherheitsrisiken und potentielle Gesundheitsgefahren für Mitarbeiter verbunden. Andererseits steht aufgrund einer maximal erlaubten Bevorratung nur eine limitierte Menge Elutionsmittel in einem Vorratsbehälter zur Verfügung. Dadurch ist jedoch ein autarker und automatisierter Analysebetrieb mittels Hochleistungs-Chromatographie nicht möglich.

Für eine optimierte Versorgung ist es deshalb auch bekannt, zwei oder mehr Vorratsbehälter miteinander zu verbinden. Dabei wird jedoch der Einsatz von zusätzlichen Komponenten, wie beispielsweise Pumpen, Ventile, Sensoren oder Armaturen, erforderlich, die mit dem Elutionsmittel in Kontakt kommen. Durch die Elutionskraft der Elutionsmittel erhöht sich damit allerdings die potentielle Gefahr, dass Verunreinigungen des Elutionsmittels auftreten, die möglicherweise dazu führen, dass die Analyseergebnisse für die zu analysierenden Stoffgemische verfälscht oder sogar unbrauchbar sind.

Verfahren und Vorrichtungen zur Versorgung eines Analysegerätes sind z.B. aus EP-A1-1 376 121 oder aus DE-A1-10 2007 058 718 bekannt.

Eine Aufgabe der Erfindung ist es daher, ein einfaches, sicheres und zuverlässiges Verfahren zur Versorgung von Analysegeräten mit Flüssigkeiten bereitzustellen, bei dem eine kontinuierliche Versorgung der Analysegeräte mit Flüssigkeiten sowie eine sichere Lagerung der Flüssigkeiten gewährleistet ist und das die Anforderungen des Chemikaliengesetzes erfüllt. Zudem sollte eine potentielle Gesundheitsgefahr für Mitarbeiter reduziert oder eliminiert werden. Weiterhin sollte das Risiko des Auftretens von verunreinigten Flüssigkeiten und damit von verfälschten oder unbrauchbaren Analyseergebnissen deutlich verringert werden.

Eine Aufgabe der Erfindung ist es ferner, eine entsprechende Vorrichtung zur Durchführung des Verfahrens sowie ein zugehöriges Analysegerät bereitzustellen.

Diese Aufgabe wird gelöst durch ein Verfahren mit den Merkmalen des unabhängigen Anspruchs 1. Vorteilhafte Weiterbildungen des Verfahrens ergeben sich aus den Unteransprüchen 2 bis 8. Diese Aufgabe wird ferner durch eine Vorrichtung nach Anspruch 9 gelöst. Ausführungsformen der Vorrichtung ergeben sich aus den Unteransprüchen 10 bis 14. Weiterhin wird diese Aufgabe gelöst durch ein Analysegerät mit den Merkmalen des Anspruchs 15.

Die Erfindung sieht ein Verfahren vor zur Versorgung wenigstens eines Analysegerätes mit wenigstens einer Flüssigkeit. In dem Verfahren wird die Flüssigkeit in einem Vorratsbehälter bereitgestellt und von dort in wenigstens einen Zwischenbehälter transportiert. Die Zuführung der Flüssigkeit zum Analysegerät erfolgt aus dem Zwischenbehälter, für den der Füllstand der Flüssigkeit überwacht wird. Dabei ist der Zwischenbehälter oberhalb des Analysegerätes und der Vorratsbehälter unterhalb des Analysegerätes angeordnet.

Dieses Verfahren stellt sicher, dass durch die Verwendung eines Zwischenbehälters, in dem kleine Mengen der Flüssigkeit für das Analysegerät bereitgestellt werden, der Vorratsbehälter mit größeren Mengen der Flüssigkeit separat in einem Sicherheitsschrank gelagert werden kann. Über die Füllstandüberwachung wird gewährleistet, dass mittels einer automatischen Regelung immer ausreichend Flüssigkeit für das Analysegerät zur Verfügung steht.

Eine Ausgestaltung des Verfahrens sieht vor, dass der Vorratsbehälter mit Druck beaufschlagt wird und dass die Flüssigkeit über eine Steigleitung aus dem Vorratsbehälter in den Zwischenbehälter transportiert wird. Die Druckbeaufschlagung erfolgt dabei durch ein Gas. Dadurch werden verschiedene Pumpen, Ventile, Sensoren oder Armaturen zur Entnahme der Flüssigkeit aus dem Vorratsbehälter überflüssig und das Risiko einer möglichen Verunreinigung der Flüssigkeit sinkt, da nur noch einige wenige, chemisch resistente Einzelteile im Versorgungssystem zur Anwendung kommen.

In einer Ausführungsform des Verfahrens wird dem Analysegerät die Flüssigkeit im Zwischenbehälter drucklos bereitgestellt. Lediglich die durch die Anordnung des Zwischenbehälters oberhalb des Analysegerätes entstehende Höhendifferenz führt zu einem geringen Überdruck am Eingang der Pumpe, die das Analysegerät mit Flüssigkeit versorgt. Dieser Überdruck minimiert die Ansaugleistung dieser Pumpe entsprechend.

Eine Weiterbildung des Verfahrens ist dadurch gekennzeichnet, dass zum Überwachen des Füllstandes der Flüssigkeit im Zwischenbehälter eine Masse des Zwischenbehälters bestimmt wird. Die Bestimmung der Masse des Zwischenbehälters bildet die Grundlage für eine gravimetrische Füllstandbestimmung, über die einfach und schnell das Volumen und damit der Füllstand der Flüssigkeit im Zwischenbehälter ermittelt werden kann.

Eine Ausführungsform des Verfahrens beschreibt, dass Messdaten für den Zwischenbehälter erfasst und von einer Elektronik ausgewertet werden. Diese Messdaten bilden Füllstanddaten für die Flüssigkeit im Zwischenbehälter ab.

In einer Ausgestaltung des Verfahrens gibt die Elektronik ein Signal aus, wenn ein vorgegebener Grenzwert für den Füllstand der Flüssigkeit im Zwischenbehälter unterschritten wird. Dieses Signal wird als Hinweis eingestuft, den Zwischenbehälter aus dem Vorratsbehälter zu befüllen, sodass ein Leerlauf des Analysegerätes verhindert werden kann und eine kontinuierliche Versorgung des Analysegerätes mit Flüssigkeit gewährleistet ist.

Eine Weiterbildung des Verfahrens sieht vor, dass der Zwischenbehälter wechselseitig aus einem von wenigstens zwei Vorratsbehältern befüllt wird. In einer Ausgestaltung des Verfahrens wird der Zwischenbehälter während eines Austauschs eines Vorratsbehälters aus dem anderen Vorratsbehälter befüllt. Falls innerhalb eines vorgegebenen Zeitintervalls durch die gravimetrische Füllstandbestimmung keine Veränderung oder aber ein weiteres Absinken des Füllstandes der Flüssigkeit im Zwischenbehälter ermittelt wurde, wird dabei von dem voraussichtlich leeren Vorratsbehälter auf den anderen Vorratsbehälter umgeschaltet. Der leere Vorratsbehälter kann nunmehr während des laufenden Analysebetriebes ausgetauscht werden. Da immer ein voller Vorratsbehälter zum Befüllen des Zwischenbehälters bereitsteht, wird somit zuverlässig ein Leerlauf des Analysegerätes verhindert.

Die Erfindung sieht ferner eine Vorrichtung vor zur Versorgung wenigstens eines Analysegerätes mit wenigstens einer Flüssigkeit, die in wenigstens einem Vorratsbehälter bereitgestellt ist. Die Vorrichtung weist wenigstens einen Zwischenbehälter auf, der oberhalb des Analysegerätes angeordnet ist. Der Vorratsbehälter hingegen ist unterhalb des Analysegerätes angeordnet. Die Flüssigkeit ist aus dem Vorratsbehälter in den Zwischenbehälter transportierbar und ist zudem dem Analysegerät aus dem Zwischenbehälter zuführbar. Die Vorrichtung weist weiterhin eine Messvorrichtung auf, die dazu ausgebildet ist, einen Füllstand für die Flüssigkeit im Zwischenbehälter zu überwachen.

Aufgrund der Verwendung von Vorratsbehälter und Zwischenbehälter sowie deren Anordnung zum Analysegerät wird mit dieser Vorrichtung ein Versorgungssystem für Flüssigkeiten bereitgestellt, dass die Möglichkeit einer Zwischenlagerung von Vorratsbehältern mit Flüssigkeiten in einem vorschriftsmäßigen Sicherheitsschrank ermöglicht. Zudem wird über die Überwachung des Füllstandes der Flüssigkeit im Zwischenbehälter eine automatische Regelung des Füllstandes ermöglicht. Dadurch bietet diese Vorrichtung einen Schutz gegen einen Leerbetrieb des Analysegerätes. Ein Überdruck im Versorgungssystem kann dabei durch Verwendung eines Zwischenbehälters mit einem Überlauf entsprechend ausgeschlossen werden. Weiterhin ist die Vorrichtung aufgrund des eingesetzten Zwischenbehälters, der getrennt vom Vorratsbehälter angeordnet ist, leicht zu warten.

In einer Ausgestaltung der Vorrichtung sind der Vorratsbehälter und der Zwischenbehälter über eine Steigleitung miteinander verbunden. Über diese Steigleitung ist eine Zuführung der Flüssigkeit aus dem unterhalb des Analysegerätes angeordneten Vorratsbehälters in den oberhalb des Analysegerätes angeordneten Zwischenbehälter mittels einer Druckbeaufschlagung möglich.

Eine Weiterbildung der Vorrichtung ist dadurch gekennzeichnet, dass die Messvorrichtung zum Überwachen des Füllstandes der Flüssigkeit im Zwischenbehälter als Waage ausgebildet ist. Mittels dieser Waage kann der Füllstand der Flüssigkeit im Zwischenbehälter schnell und einfach über eine gravimetrische Füllstandbestimmung ermittelt werden.

Eine Ausführungsform der Vorrichtung sieht vor, dass die Messvorrichtung mit einer Elektronik zum Auswerten von Messdaten verbunden ist. Diese Messdaten bilden Füllstanddaten für die Flüssigkeit im Zwischenbehälter ab.

In einer Ausgestaltung der Vorrichtung ist der Zwischenbehälter als geschlossener Behälter ausgebildet, der jeweils wenigstens einen Zulauf und einen Ablauf für die Flüssigkeit aufweist. Mit diesem geschlossenen Zwischenbehälter wird sichergestellt, dass das gesamte Versorgungssystem als geschlossenes System ausgebildet ist und dass dadurch eine Beeinflussung von außen nicht möglich ist.

Eine Weiterbildung der Vorrichtung beschreibt, dass die Vorrichtung wenigstens zwei Vorratsbehälter aufweist und dass der Zwischenbehälter wechselseitig aus jeweils einem der Vorratsbehälter befüllbar ist. Die Verwendung von zwei Vorratsbehältern bietet die Möglichkeit, dass das Befüllen des Zwischenbehälter bei einem Austausch eines leeren Vorratsbehälters durch einen vollen Vorratsbehälter nicht unterbrochen werden muss, da der Zwischenbehälter in dieser Zeit aus dem anderen Vorratsbehälter befüllbar ist. Dies ermöglicht eine kontinuierliche Versorgung des Analysegerätes mit Flüssigkeit.

Zusätzlich sieht die Erfindung noch ein Analysegerät vor, dass wenigstens eine Vorrichtung zur Versorgung des Analysegerätes mit wenigstens einer Flüssigkeit mit den beschriebenen Merkmalen aufweist.

Das Verfahren und die Vorrichtung zur Versorgung eines Analysegerätes mit einer Flüssigkeit wenden sich damit ab von Versorgungssystemen, bei denen die Vorratsbehälter oberhalb des Analysegerätes in Arbeitshöhe eines Mitarbeiters angeordnet sind. Bei diesen herkömmlichen Versorgungssystemen besteht ein hohes Sicherheitsrisiko, da der Einsatz eines Sicherheitsschrankes zur sicheren Lagerung der oberhalb des Analysegerätes angeordneten Vorratsbehälter mit Flüssigkeit erschwert oder sogar unmöglich ist.

Mit der vorteilhaften Verwendung eines Zwischenbehälters oberhalb und mit der dadurch möglichen Anordnung der Vorratsbehälter für die Flüssigkeit unterhalb des Analysegerätes wird nunmehr eine entscheidende Erhöhung der Sicherheit des Versorgungssystems erreicht. Die Vorratsbehälter können dadurch in einem vorschriftsmäßigen Sicherheitsschrank verwahrt werden, der unterhalb des Analysegerätes auf dem Boden angeordnet sein kann.

Durch die Anordnung der Vorratsbehälter unterhalb des Analysegerätes ist auch die Forderung nach einem Austausch leerer Vorratsbehälter durch volle Vorratsbehälter in Arbeitshöhe eines Mitarbeiters nicht mehr gegeben. Damit wird eine potentielle Gesundheitsgefahr für den jeweiligen Mitarbeiter eliminiert, da das Austreten von Dämpfen in Arbeitshöhe des Mitarbeiters, die üblicherweise bei einem Austausch der Vorratsbehälter entstehen, wirkungsvoll verhindert wird.

Zudem ist das Risiko eines Fallens des Vorratsbehälters aus Arbeitshöhe auf den Boden oder auch eines Umfallens des Vorratsbehälters auf Arbeitshöhe des Mitarbeiters beim Austausch der Vorratsbehälter eliminiert. Damit verbundene potentielle Gefahrensituationen durch große Mengen austretender Flüssigkeit können nicht mehr entstehen.

Das Risiko einer Kontamination des Analysegerätes durch oberhalb des Analysegerätes austretende Flüssigkeit ist ebenfalls reduziert, da nur noch der als geschlossener Behälter ausgebildete Zwischenbehälter oberhalb des Analysegerätes angeordnet ist.

Weiterhin wenden sich das Verfahren und die Vorrichtung ab von Versorgungssystemen mit einer Vielzahl von erforderlichen Einzelteile, wie beispielweise Pumpen, Ventile, Sensoren oder Armaturen, die die Reinheit der verwendeten Flüssigkeiten negativ beeinflussen können. Verunreinigungen können bei den bekannten Versorgungssystemen beispielsweise dadurch entstehen, dass die Einzelteile teilweise chemisch nicht-inerte Materialien, wie beispielsweise verschiedene Kunststoffe, enthalten, aus denen durch die Flüssigkeit Bestandteile, beispielsweise Kunststoff-Extrakte wie Weichmacher, herausgelöst werden können. Zudem erfordern einige dieser Einzelteile, beispielsweise Ventile oder Armaturen, Schmieröle oder -fette für ihre Funktion, die in die Flüssigkeit gelangen können.

Da sich das Verfahren und die Vorrichtung vorteilhaft durch die Verwendung einer Druckbeaufschlagung des Vorratsbehälters mit einem Gas auszeichnen, können viele Einzelteile entfallen, die für herkömmliche Versorgungssysteme erforderlich sind. Dadurch wird die Zahl der nicht-inerten Materialien und damit der potentiellen Quellen für Verunreinigungen durch Herauslösen von Bestandteilen aus den nicht-inerten Materialien reduziert und auch Verunreinigungen durch Schmieröle oder -fette entfallen, da entsprechende Einzelteile nicht mehr benötigt werden.

Zusätzlich wird durch das Verfahren und die Vorrichtung eine kontinuierliche Versorgung der Analysegeräte mit einer Flüssigkeit gewährleistet, da der Zwischenbehälter wechselseitig aus jeweils einem von zwei Vorratsbehältern befüllt wird. Ein leerer Vorratsbehälter kann somit immer dann ausgetauscht werden, wenn der Zwischenbehälter aus dem anderen Vorratsbehälter befüllt wird. Dadurch steht immer ein voller Vorratsbehälter bereit, sodass ein Leerlauf der Analysegeräte wirkungsvoll verhindert wird.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:

Fig. 1     einen Vorratsbehälter mit einer Druckbeaufschlagung,

Fig. 2     einen Zwischenbehälter mit einer Füllstandskontrolle und

Fig. 3     eine Lösungsmittelversorgung mit zwei Vorratsbehältern.

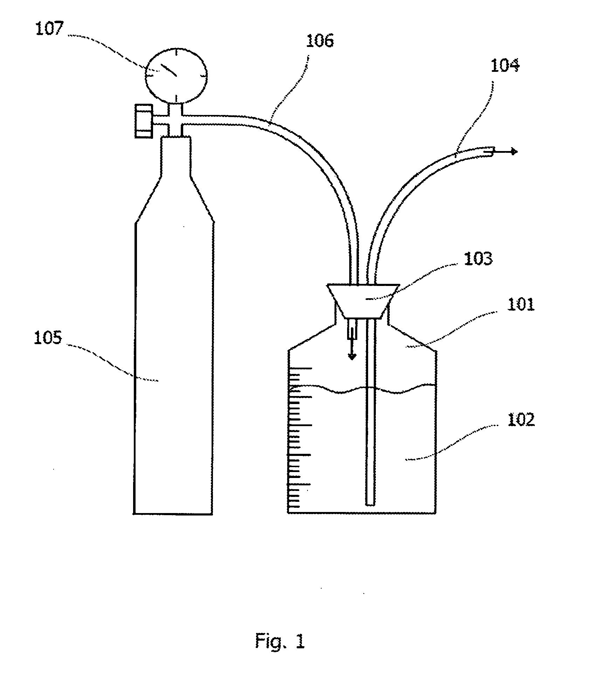

In Fig. 1 ist schematisch das Beispiel eines Vorratsbehälters 101 dargestellt, der mit einem Lösungsmittel 102 gefüllt ist.

Der Vorratsbehälter 101 besteht aus einem chemisch inerten Material, beispielsweise aus einem bruchsicheren Glas, damit Verunreinigungen des Lösungsmittels 102 durch Herauslösen von einzelnen Bestandteilen aus dem Vorratsbehälter 101 verhindert werden. Es können aber auch andere Materialien für den Vorratsbehälter 101 verwendet werden.

Verschlossen wird der Vorratsbehälter 101 mit einem Verschluss 103. Bei dem Verschluss 103 handelt es sich um einen Sicherheitsverschluss, der sicherstellt, dass der Vorratsbehälter 101 dicht verschlossen ist und dass so ein geschlossenes System entsteht. Ein geeignetes Material für den Verschluss 103 ist beispielsweise Polytetrafluorethylen (PTFE).

Durch den Verschluss 103 des Vorratsbehälters 101 hindurch ist eine Flüssigkeitsleitung 104 aus dem Vorratsbehälter 101 heraus geführt. Über diese Flüssigkeitsleitung 104 erfolgt die Entnahme des Lösungsmittels 102 aus dem Vorratsbehälter 101.

Als Grundmaterial für die Flüssigkeitsleitung 104 erscheint beispielsweise Perfluoralkoxylalkan (PFA) geeignet. PFA weist eine hohe thermische und chemische Beständigkeit auf. Es ist flammwidrig und zeigt ein weitgehend inertes Verhalten auf, wodurch Verunreinigungen des Lösungsmittels 102 während des Durchflusses durch die Flüssigkeitsleitung 104 vermieden werden. Es können aber auch andere Materialien für die Flüssigkeitsleitung 104 zur Anwendung kommen.

Für die Entnahme des Lösungsmittels 102 wird der Vorratsbehälter 101 mit einem Druck beaufschlagt. Erzeugt wird dieser Druck über ein Gas, das aus einer Druckflasche 105 über eine druckfeste Gasleitung 106 in den Vorratsbehälter 101 eingeleitet wird. Das eingeleitete Gas verdrängt dann das Lösungsmittel 102 aus dem Vorratsbehälter 101 in die Flüssigkeitsleitung 104. Sowohl die Strömungsrichtung des Gases aus der Druckflasche 105 durch die Gasleitung 106 in den Vorratsbehälter 101 als auch die Strömungsrichtung des Lösungsmittels 102 aus dem Vorratsbehälter 101 in die Flüssigkeitsleitung 104 sind dabei durch Pfeile entsprechend gekennzeichnet.

Der einstellbare Druck, mit dem das Gas aus der Druckflasche 105 in den Vorratsbehälter 101 eingeleitet wird, beeinflusst die Fließgeschwindigkeit des Lösungsmittels 102 in der Flüssigkeitsleitung 104. Je höher der Gasdruck, umso schneller und je niedriger der Gasdruck, umso langsamer wird das Lösungsmittel 102 aus dem Vorratsbehälter 101 in die Flüssigkeitsleitung 104 verdrängt. Zur Einstellung des Drucks ist an der Druckflasche 105 ein Druckregler 107 vorgesehen.

Als Druckregler 107 kann beispielsweise eine automatische Regelung verwendet werden. Mit einer automatischen Regelung sind Gasdruck des Gases und damit Fließgeschwindigkeit des Lösungsmittels 102 sehr genau einstellbar. Es ist aber auch möglich, eine manuelle Bedienung einzusetzen, die einfach und schnell realisiert werden kann.

Als Gas für die Druckbeaufschlagung des Vorratsbehälters 101 empfiehlt sich zur Vermeidung einer Verunreinigung des Lösungsmittels 102 ein Inertgas, beispielsweise Argon als ein Edelgas. Geeignet erscheint auch Stickstoff als reaktionsträges Gas. Es sind aber auch andere Gase für die Beaufschlagung des Vorratsbehälters 101 vorstellbar.

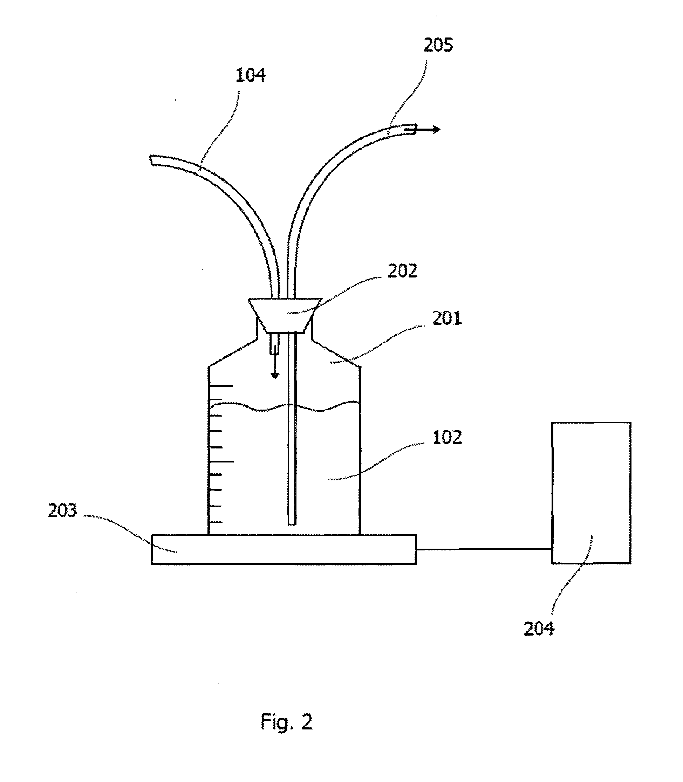

Fig. 2 zeigt schematisch das Beispiel eines Zwischenbehälters 201, der mit Lösungsmittel 102 gefüllt ist.

Der Zwischenbehälter 201 besteht ebenfalls wie der Vorratsbehälter 101 aus einem chemisch inerten Material, beispielsweise aus einem bruchsicheren Glas, damit Verunreinigungen des Lösungsmittels 102 durch Herauslösen von einzelnen Bestandteilen aus dem Zwischenbehälter 201 verhindert werden. Es können aber auch andere Materialien für den Zwischenbehälter 201 verwendet werden.

Zum Verschließen des Zwischenbehälters 201 ist ein Verschluss 202 vorgesehen. Bei dem Verschluss 202 handelt es sich gleichfalls um einen Sicherheitsverschluss, der sicherstellt, dass der Zwischenbehälter 201 dicht verschlossen ist und dass so ein geschlossenes System entsteht. Als Material für den Verschluss 202 ist ebenfalls beispielsweise Polytetrafluorethylen (PTFE) geeignet.

Durch den Verschluss 202 des Zwischenbehälters 201 hindurch ist die Flüssigkeitsleitung 104 in den Zwischenbehälter 201 hinein geführt. Über die Flüssigkeitsleitung 104 erfolgt das Befüllen des Zwischenbehälters 201 mit Lösungsmittel 102 aus dem Vorratsbehälter 101.

Entweder am Zwischenbehälter 201 oder am Verschluss 202 kann ein nicht dargestellter Überlauf angeordnet sein, der die Entstehung eines Überdrucks im Zwischenbehälter 201 sicher verhindert.

Für die Bestimmung des Füllstandes des Lösungsmittels 102 im Zwischenbehälter 201 ist der Zwischenbehälter 201 auf einer Messvorrichtung für eine sensorische Füllstandkontrolle, beispielsweise auf einer Waage 203, abgestellt.

Bei der Waage 203 handelt es sich um ein Messgerät zur Bestimmung einer Masse, die über die Gewichtskraft ermittelt wird. Als Waage 203 empfiehlt sich beispielweise eine elektronische Tischwaage, die robust, genau und schnell ablesbar ist. Zudem können die Messdaten einer elektronischen Tischwaage elektronisch verarbeitet und ausgewertet werden.

Mit der Waage 203 wird eine gravimetrische Füllstandbestimmung realisiert, bei der aus der ermittelten Masse des Zwischenbehälters 201 mit dem Lösungsmittel 102 der Füllstand des Lösungsmittels 102 im Zwischenbehälter 201 abgeleitet wird. Dafür wird von der Waage 203 kontinuierlich die Masse des Zwischenbehälters 201 mit Lösungsmittel 102 bestimmt und die ermittelten Messdaten werden an eine Elektronik 204 weitergeleitet und dort verarbeitet.

Als Elektronik 204 kann dabei eines der bekannten Systeme zur Datenverarbeitung, beispielsweise ein Computer mit einem Prozessor und einem Speicher, zur Anwendung kommen.

Für die Bestimmung des Füllstandes des Lösungsmittels 102 können in der Elektronik 204 unterschiedliche Daten hinterlegt sein. Zu diesen Daten gehören beispielsweise die Leermasse des Zwischenbehälters 201 sowie das spezifische Gewicht des verwendeten Lösungsmittels 102. Unter Verwendung dieser Daten ergibt sich der Füllstand für das Lösungsmittel 102 im Zwischenbehälter 201 dann wie folgt:

$$V = \frac{(F - M * g)}{G}$$

Dabei haben die einzelnen Formelzeichen folgende Bedeutung:

V: Volumen [m³] des Lösungsmittels 102
F: gemessene Gewichtskraft [N]
M: Leermasse [kg] des Zwischenbehälters 201
g: Schwerebeschleunigung [9,81 m/s²]
G: spezifisches Gewicht [N/m³] des Lösungsmittels 102

Alternativ kann auch ein vereinfachtes Verfahren zur Bestimmung des Füllstandes des Lösungsmittels 102 im Zwischenbehälter 201 zur Anwendung kommen. In diesem vereinfachten Verfahren wird der leere Zwischenbehälter 201 gewogen und das ermittelte Gewicht als unterer Kalibrierpunkt definiert. Für einen oberen Kalibrierpunkt wird das Gewicht des mit einer definierten Menge, beispielsweise mit 100ml, gefüllten Zwischenbehälters 201 bestimmt. Beide Kalibrierpunkte werden entsprechend in der Elektronik 204 hinterlegt. Aufgrund der bestehenden linearen Abhängigkeit ist es nunmehr unter Verwendung dieser beiden Kalibrierpunkte möglich, den Füllstand des Lösungsmittels 102 im Zwischenbehälter 201 aus der gemessenen Gewichtskraft abzuleiten.

Zur Entnahme des Lösungsmittels 102 aus dem Zwischenbehälter 201 ist durch den Verschluss 202 eine weitere Flüssigkeitsleitung 205 hindurch geführt. Über diese Flüssigkeitsleitung 205 kann das Lösungsmittel 102 für eine weitere Verwendung drucklos aus dem Zwischenbehälter 201 entnommen werden. Sowohl die Strömungsrichtung des Lösungsmittels 102 durch die Flüssigkeitsleitung 104 in den Zwischenbehälter 201 als auch die Strömungsrichtung des Lösungsmittels 102 aus dem Zwischenbehälter 201 in die Flüssigkeitsleitung 205 sind auch hier durch Pfeile entsprechend gekennzeichnet.

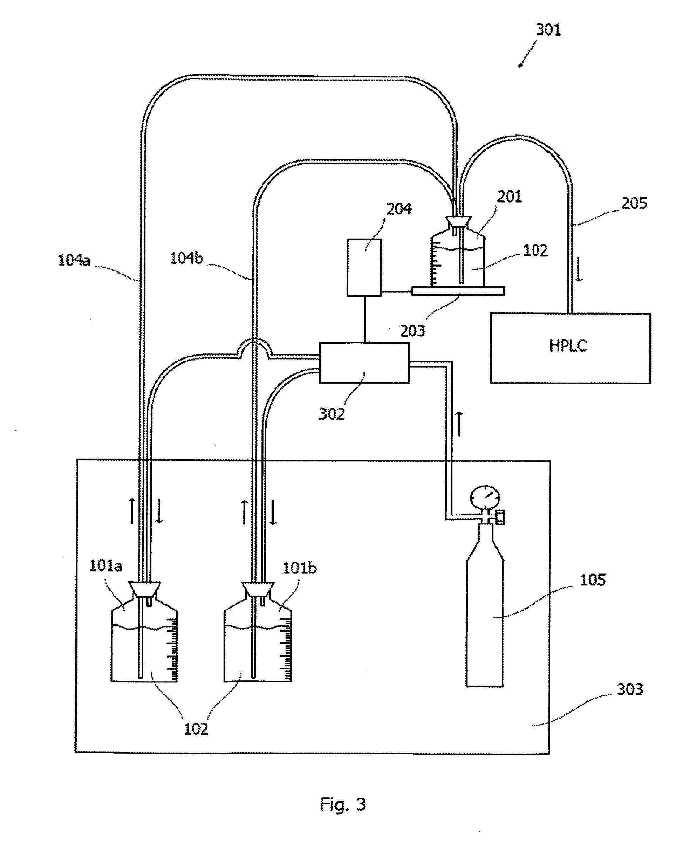

In Fig. 3 ist beispielhaft eine Lösungsmittelversorgung 301 als Vorrichtung zur Zuführung von Lösungsmittel 102 aus einem Zwischenbehälter 201 zu einem Analysegerät HPLC m it zwei Vorratsbehältern 101 a und 101 b dargestellt. Bei der Lösungsmittelversorgung 301 sind die Vorratsbehälter 101 a und 101 b unterhalb und der Zwischenbehälter 201 oberhalb des Analysegerätes HPLC angeordnet.

Das Befüllen des Zwischenbehälters 201 mit Lösungsmittel 102 erfolgt wechselseitig aus den beiden Vorratsbehältern 101 a und 101 b. Dafür ist vor den beiden Vorratsbehältern 101 a und 101 b eine Druck-Umschaltvorrichtung 302 vorgesehen, die die Zuführung des Lösungsmittels 102 aus jeweils einem der beiden Vorratsbehälter 101 a oder 101 b steuert.

Begonnen wird das Befüllen des Zwischenbehälters 201 mit Lösungsmittel 102 aus dem Vorratsbehälter 101 a. Dafür wird der Vorratsbehälter 101 a m it Gas aus der Druckflasche 105 beaufschlagt. Durch den Gasdruck steigt das Lösungsmittel 102 über die Flüssigkeitsleitung 104a in den Zwischenbehälter 201. Die Flüssigkeitsleitung 104a ist hier als Steigleitung ausgebildet, da der Vorratsbehälter 101 a unterhalb des Zwischenbehälters 201 angeordnet ist.

Anstelle der Druckflasche 105 kann auch eine stationäre Gas-Versorgungseinrichtung oder eine gebäudeseitig installierte zentrale Gasanlage verwendet werden, über die das entsprechende Gas mit einem regelbaren Druck zum Druckbeaufschlagen der Vorratsbehälter 101 a und 101 b bereitgestellt wird. Eine weitere alternative Möglichkeit ist die Verwendung von jeweils einer separaten Druckflasche 105 für jeden der beiden Vorratsbehälter 101 a und 101 b.

Während des Befüllens mit Lösungsmittel 102 ermittelt die Waage 203 kontinuierlich die Masse des Zwischenbehälters 201 und leitet die Messdaten an die Elektronik 204 zur Auswertung weiter. In der Elektronik 204 erfolgt die Bestimmung des Füllstandes des Lösungsmittels 102 im Zwischenbehälter 201 aus den ermittelten Messdaten. Mit Erreichen eines vorab definierten maximalen Füllstandes des Lösungsmittels 102 im Zwischenbehälter 201 wird die Zuführung von Lösungsmittel 102 aus dem Vorratsbehälter 101 a in den Zwischenbehälter 201 gestoppt.

Das Lösungsmittel 102 kann nunmehr dem Analysegerät HPLC mittels einer HPLC-Pumpe aus dem Zwischenbehälter 201 zugeführt werden. In dem Analysegerät HPLC dient das Lösungsmittel 102 beispielsweise als mobile Phase bei der Durchführung von Analysen mittels Hochleistungs-Chromatographie. Bei der Durchführung der Analysen wird den Trennsäulen des Hochleistungs-Chromatographen die erforderliche Menge Lösungsmittel 102 aus dem Zwischenbehälter 201 zugeführt. Damit immer ausreichend Lösungsmittel 102 für die Analysen im Zwischenbehälter 201 zur Verfügung steht, wird die entnommene Menge Lösungsmittel 102 aus dem Vorratsbehälter 101 a über die Flüssigkeitsleitung 104a wieder aufgefüllt.

Das Auffüllen des Zwischenbehälters 201 mit Lösungsmittel 102 kann sowohl kontinuierlich als auch diskontinuierlich erfolgen. Bei einem kontinuierlichen Auffüllen des Zwischenbehälters 201 entspricht die Entnahmegeschwindigkeit des Lösungsmittels 102 aus dem Zwischenbehälter 201 der Zuführungsgeschwindigkeit des Lösungsmittels 102 aus dem Vorratsbehälter 101 a in den Zwischenbehälter 201. Bei einem diskontinuierlichen Auffüllen des Zwischenbehälters 201 hingegen erfolgt erst bei Unterschreiten eines vorab definierten minimalen Füllstandes des Lösungsmittels 102 im Zwischenbehälter 201 eine erneute Zuführung von Lösungsmittel 102 aus dem Vorratsbehälter 101a in den Zwischenbehälter 201. Mit Erreichen des definierten maximalen Füllstandes des Lösungsmittels 102 im Zwischenbehälter 201 wird die Zuführung von Lösungsmittel 102 aus dem Vorratsbehälter 101a in den Zwischenbehälter 201 dann wieder gestoppt

Wenn während der Durchführung von Analysen der Vorratsbehälter 101 a entleert worden ist und wenn dadurch kein Lösungsmittel 102 mehr in den Zwischenbehälter 201 geleitet werden kann, sinkt der Füllstand des Lösungsmittels 102 im Zwischenbehälter 201. Damit sinken auch die Messwerte für die Masse des Zwischenbehälters 201.

Bei Unterschreiten eines vorab definierten und in der Elektronik 204 hinterlegten Grenzwertes für den Füllstand des Lösungsmittels 102, der beim diskontinuierlichen Auffüllen noch unterhalb des minimalen Füllstandes liegt, gibt die Elektronik 204 ein Signal aus. Bei diesem Signal kann es sich beispielweise um ein akustisches oder um ein optisches Signal handeln. Auch eine Kombination beider Signale ist möglich. Die Ausgabe des Signals erfolgt in Abhängigkeit von seiner Art dann beispielsweise über einen Lautsprecher oder über eine optische Anzeige oder auch einen Bildschirm.

Das Signal der Elektronik 204 zeigt somit an, dass Lösungsmittel 102 in den Zwischenbehälter 201 gefüllt werden muss. Alternativ kann das Signal der Elektronik 204 auch als Hinweis eingestuft werden, dass der Vorratsbehälter 101a leer ist und durch einen vollen Vorratsbehälter 101a ersetzt werden muss.

Mit Ausgabe des Signals gibt die Elektronik 204 auch ein Signal an die Gas-Umschaltvorrichtung 302 aus. Dieses Signal bewirkt eine Umschaltung der Zuführung des Lösungsmittels 102 in den Zwischenbehälter 201 von Vorratsbehälter 101a zu Vorratsbehälter 101 b. Dafür wird ein Ventil in der Gas-Umschaltvorrichtung 302 umgeschaltet und es beginnt die Druckbeaufschlagung des Vorratsbehälters 101 b über die Druckflasche 105.

Bei Verwendung von zwei separaten Druckflaschen 105 für die beiden Vorratsbehälter 101 a und 101 b erfolgt das Umschalten gleichzeitig auch von der Druckflasche 105 für Vorratsbehälter 101 a auf die andere Druckflasche 105 des Vorratsbehälters 101b.

Die Druckbeaufschlagung des Vorratsbehälters 101 b bewirkt ein Aufsteigen des Lösungsmittels 102 über die Flüssigkeitsleitung 104b, die ebenfalls als Steigleitung ausgeführt ist, in den Zwischenbehälter 201. Dadurch steigt der Füllstand im Zwischenbehälter 201 wieder entsprechend.

Nun kann der leere Vorratsbehälter 101 a durch einen vollen ersetzt werden, ohne dass die laufenden Analysen mit dem Analysegerät HPLC unterbrochen werden müssen. Dieser Umschaltvorgang zwischen den beiden Vorratsbehältern 101 a und 101 b für den Austausch eines leeren Vorratsbehälters 101 a oder 101 b ist beliebig oft wiederholbar. Immer dann, wenn einer der beiden Vorratsbehälter 101 a oder 101 b entleert ist, wird durch das Ventil in der Gas-Umschaltvorrichtung 302 auf den anderen Vorratsbehälter 101 a oder 101 b umgeschaltet und der leere Vorratsbehälter 101a oder 101 b kann ausgetauscht werden. Damit wird sichergestellt, dass jederzeit ein voller Vorratsbehälter 101 a oder 101 b bereitsteht, sodass eine kontinuierliche Versorgung des Analysegerätes HPLC mit Lösungsmittel 102 gewährleistet ist und ein Leerlauf des Analysegerätes HPLC wirkungsvoll verhindert wird.

Die Vorratsbehälter 101 a und 101 b sind aus Sicherheitsgründen in einem auf dem Boden abgestellten Sicherheitsschrank 303 untergebracht, der entsprechend den Vorgaben des Chemikaliengesetzes ausgeführt ist. Dieser Sicherheitsschrank 303 weist eine Absaugung für austretende Dämpfe des Lösungsmittels 102 auf und ist entsprechend explosionsgeschützt.

Das Austauschen der Vorratsbehälter 101 a und 101 b erfolgt damit nicht mehr in Arbeitshöhe eines Mitarbeiters, sondern unterhalb des Analysegerätes HPLC in Bodenhöhe. Dies erhöht die Sicherheit und reduziert die Gesundheitsgefahr für den jeweiligen Mitarbeiter. Die Vorratsbehälter 101 a und 101 b können nicht mehr aus Arbeitshöhe auf den Boden fallen und die im Sicherheitsschrank 303 installierte Absaugung verringert die Konzentration der austretenden Dämpfe beim Austausch der Vorratsbehälter 101 a und 101 b.

Neben den Vorratsbehältern 101 a und 101 b können in dem Sicherheitsschrank 303 zusätzlich auch noch Abfallbehälter für das Eluat des Analysegerätes HPLC gelagert werden. Die Abfallbehälter für das Eluat können aber auch in einem anderen Sicherheitsschrank gelagert werden.

Eine weitere Erhöhung der Sicherheit für die Mitarbeiter und auch für das Analysegerät HPLC wird dadurch erreicht, dass der Zwischenbehälter 201 fest installiert und dabei entsprechend gegen Umfallen gesichert werden kann. Da ein Austausch des Zwischenbehälters 201 nicht erforderlich ist, sinkt die Gesundheitsgefahr für den Mitarbeiter weiter.

Der Zwischenbehälter 201 kann sowohl für die Versorgung eines als auch für die Versorgung von mehreren Analysegeräten HPLC verwendet werden. Erforderlich ist dafür lediglich eine entsprechende Dimensionierung des Zwischenbehälters 201 sowie der Flüssigkeitsleitungen 104a und 104b.

Ebenfalls vorstellbar ist, dass die beiden Vorratsbehälter 101 a und 101 b mit unterschiedlichen Flüssigkeiten gefüllt sind. Über eine gleichzeitige Zuführung der Flüssigkeiten aus den beiden Vorratsbehältern 101 a und 101 b in den Zwischenbehälter 201 werden die Flüssigkeiten im Zwischenbehälter 201 dann beispielsweise zu einem Lösungsmittel 102 vermischt und dem Analysegerät HPLC bereitgestellt.

Mit der Vorrichtung 301 und dem zugehörigen Verfahren zur Versorgung eines Analysegerätes HPLC mit einem Lösungsmittel 102 wird ein einfaches, sicheres und zuverlässiges Versorgungssystem für Analysegeräte und Liquid Handling Systeme zur Verfügung gestellt. Die Vorrichtung 301 und das Verfahren gewährleisten eine kontinuierliche Versorgung der Analysegeräte sowie eine vorschriftsmäßige Lagerung des Lösungsmittels 102 und eine Versorgung mit einem reinen Lösungsmittel 102 ohne Verunreinigungen, die die Analyseergebnisse verfälschen könnten. Zudem bieten die Vorrichtung 301 und das Verfahren die Möglichkeit, die Anforderungen des Chemikaliengesetzes entsprechend zu erfüllen und potentielle Gesundheitsgefahren für Mitarbeiter zu minimieren.

Bezugszeichenliste:

| 101, 101a, 101 b | Vorratsbehälter |
|---|---|
| 102 | Lösungsmittel/Flüssigkeit |
| 103 | Verschluss |
| 104, 104a, 104b | Flüssigkeitsleitung/Steigleitung |
| 105 | Druckflasche |
| 106 | Gasleitung |
| 107 | Druckregler |
| | |
| 201 | Zwischenbehälter |
| 202 | Verschluss |
| 203 | Waage |
| 204 | Elektronik |
| 205 | Flüssigkeitsleitung |
| | |
| 301 | Lösungsmittelversorgung |
| 302 | Druck-Umschaltvorrichtung |
| 303 | Sicherheitsschrank |

**Patentansprüche**

1. Verfahren zur Versorgung wenigstens eines Analysegerätes mit wenigstens einer Flüssigkeit (102), wobei die Flüssigkeit (102) in wenigstens einem Vorratsbehälter (101, 101 a, 101 b) bereitgestellt wird, **dadurch gekennzeichnet, dass** die Flüssigkeit (102) aus dem Vorratsbehälter (101, 101a, 101 b) in wenigstens einen Zwischenbehälter (201) transportiert wird und dass dem Analysegerät die Flüssigkeit (102) aus dem Zwischenbehälter (201) zugeführt wird, wobei der Zwischenbehälter (201) oberhalb des Analysegerätes und der Vorratsbehälter (101, 101a, 101 b) unterhalb des Analysegerätes angeordnet ist, und dass ein Füllstand der Flüssigkeit (102) im Zwischenbehälter (201) überwacht wird.

2. Verfahren nach Anspruch 1, **dadurch gekennzeichnet, dass** der Vorratsbehälter (101, 101 a, 101 b) mit Druck beaufschlagt wird, wobei die Druckbeaufschlagung durch ein Gas erfolgt und dass die Flüssigkeit (102) über eine Steigleitung (104, 104a, 104b) aus dem Vorratsbehälter (101, 101 a, 101 b) in den Zwischenbehälter (201) transportiert wird.

3. Verfahren nach einem der Ansprüche 1 oder 2, **dadurch gekennzeichnet, dass** dem Analysegerät die Flüssigkeit (102) im Zwischenbehälter (201) drucklos bereitgestellt wird.

4. Verfahren nach einem der Ansprüche 1 bis 3, **dadurch gekennzeichnet, dass** zum Überwachen des Füllstandes der Flüssigkeit (102) im Zwischenbehälter (201) eine Masse des Zwischenbehälters (201) bestimmt wird.

5. Verfahren nach einem der Ansprüche 1 bis 4, **dadurch gekennzeichnet, dass** Messdaten für den Zwischenbehälter (201) erfasst und von einer Elektronik (204) ausgewertet werden, wobei die Messdaten Füllstanddaten für die Flüssigkeit (102) im Zwischenbehälter (201) abbilden.

6. Verfahren nach einem der Ansprüche 1 bis 5, **dadurch gekennzeichnet, dass** die Elektronik (204) ein Signal ausgibt, wenn ein vorgegebener Grenzwert für den Füllstand der Flüssigkeit (102) im Zwischenbehälter (201) unterschritten wird, wobei das Signal als Hinweis eingestuft wird, den Zwischenbehälter (201) zu befüllen.

**7.** Verfahren nach einem der Ansprüche 1 bis 6, **dadurch gekennzeichnet,** **dass** der Zwischenbehälter (201) wechselseitig aus einem von wenigstens zwei Vorratsbehältern (101 a, 101 b) befüllt wird.

**8.** Verfahren nach Anspruch 7, **dadurch gekennzeichnet,** **dass** der Zwischenbehälter (201) während eines Austauschs eines Vorratsbehälters (101 a, 101 b) aus dem anderen Vorratsbehälter (101 a, 101 b) befüllt wird.

**9.** Vorrichtung (301) zur Versorgung wenigstens eines Analysegerätes mit wenigstens einer Flüssigkeit (102), wobei die Flüssigkeit (102) in wenigstens einem Vorratsbehälter (101, 101 a, 101 b) bereitgestellt ist, **dadurch gekennzeichnet,** **dass** die Vorrichtung (301) wenigstens einen Zwischenbehälter (201), den Vorratsbehälter, eine Steigleitung zum Transportieren der Flüssigkeit und eine Flüssigkeitsleitung zum Zuführen der Flüssigkeit aufweist, wobei der Zwischenbehälter (201) oberhalb des Analysegerätes und der Vorratsbehälter (101, 101 a, 101 b) unterhalb des Analysegerätes angeordnet ist und wobei die Flüssigkeit (102) aus dem Vorratsbehälter (101, 101 a, 101 b) in den Zwischenbehälter (201) mittels der Steigleitung transportierbar ist und wobei dem Analysegerät die Flüssigkeit (102) aus dem Zwischenbehälter (201) mittels der Flüssigkeitsleitung zuführbar ist, und **dass** die Vorrichtung (301) eine Messvorrichtung aufweist, wobei die Messvorrichtung dazu ausgebildet ist, einen Füllstand der Flüssigkeit (102) im Zwischenbehälter (201) zu überwachen.

**10.** Vorrichtung (301) nach Anspruch 9, **dadurch gekennzeichnet,** **dass** der Vorratsbehälter (101, 101 a, 101 b) und der Zwischenbehälter (201) über eine Steigleitung (104, 104a, 104b) miteinander verbunden sind.

**11.** Vorrichtung (301) nach einem der Ansprüche 9 oder 10, **dadurch gekennzeichnet,** **dass** die Messvorrichtung zum Überwachen des Füllstandes der Flüssigkeit (102 im Zwischenbehälter als Waage (203) ausgebildet ist.

**12.** Vorrichtung (301) nach einem der Ansprüche 9 bis 11, **dadurch gekennzeichnet,** **dass** die Messvorrichtung mit einer Elektronik (204) zum Auswerten von Messdaten verbunden ist, wobei die Messdaten Füllstanddaten für die Flüssigkeit (102) im Zwischenbehälter (201) abbilden.

**13.** Vorrichtung (301) nach einem der Ansprüche 9 bis 12, **dadurch gekennzeichnet,** **dass** der Zwischenbehälter (201) als geschlossener Behälter ausgebildet ist, der jeweils wenigstens einen Zulauf und einen Ablauf für die Flüssigkeit (102) aufweist.

**14.** Vorrichtung (301) nach einem der Ansprüche 9 bis 13, **dadurch gekennzeichnet,** **dass** die Vorrichtung (301) wenigstens zwei Vorratsbehälter (101 a, 101 b) aufweist, wobei der Zwischenbehälter (201) wechselseitig aus jeweils einem der Vorratsbehälter (101 a, 101 b) befüllbar ist.

**15.** Analysegerät, **dadurch gekennzeichnet,** **dass** das Analysegerät wenigstens eine Vorrichtung (301) zur Versorgung des Analysegerätes mit wenigstens einer Flüssigkeit (102) gemäß den Ansprüchen 9 bis 14 aufweist.

**Claims**

**1.** A method to supply at least one analyzer with at least one liquid (102), whereby the liquid (102) is provided in at least one storage tank (101, 101a, 101b), **characterized in that** the liquid (102) is transferred from the storage tank (101, 101a, 101b) into at least one intermediate tank (201), and **in that** the liquid (102) is fed from the intermediate tank (201) to the analyzer, whereby the intermediate tank (201) is arranged above the analyzer and the storage tank (101, 101a, 101b) is arranged below the analyzer, and **in that** the filling level of the liquid (102) in the intermediate tank (201) is monitored.

**2.** The method according to claim 1, **characterized in that** the storage tank (101, 101a, 101b) is pressurized, whereby the pressurization is carried out by means of a gas, and **in that** the liquid (102) is transferred via a riser (104, 104a, 104b) from the storage tank (101, 101a, 101b) into the intermediate tank (201).

**3.** The method according to claim 1 or claim 2, **characterized in that** the liquid (102) in the intermediate tank (201) is provided to the analyzer in an unpressurized manner.

**4.** The method according to one of claims 1 to 3,

**characterized in that**
the weight of the intermediate tank (201) is determined in order to monitor the filling level of the liquid (102) in the intermediate tank (201).

5. The method according to one of claims 1 to 4, **characterized in that**
measured data for the intermediate tank (201) is acquired and evaluated by an electronic unit (204), whereby the measured data comprises filling level data for the liquid (102) in the intermediate tank (201).

6. The method according to one of claims 1 to 5, **characterized in that**
the electronic unit (204) emits a signal when the value of the filling level of the liquid (102) in the intermediate tank (201) falls below a prescribed limit value, whereby the signal is interpreted as an indication that the intermediate tank (201) should be filled.

7. The method according to one of claims 1 to 6, **characterized in that**
the intermediate tank (201) is filled alternately from one of at least two storage tanks (101a, 101b).

8. The method according to claim 7, **characterized in that**
while one storage tank (101a, 101b) is being replaced, the intermediate tank (201) is filled from the other storage tank (101a, 101b).

9. A device (301) to supply at least one analyzer with at least one liquid (102), whereby the liquid (102) is provided in at least one storage tank (101, 101a, 101b),
**characterized in that**
the device (301) has at least one intermediate tank (201), the storage tank, a riser to transfer the liquid, and a liquid line to feed the liquid, whereby the intermediate tank (201) is arranged above the analyzer and the storage tank (101, 101a, 101b) is arranged below the analyzer, and whereby the liquid (102) can be transferred from the storage tank (101, 101a, 101b) into the intermediate tank (201) via the riser, and whereby the liquid (102) can be fed from the intermediate tank (201) to the analyzer via the liquid line, and
**in that** the device (301) has a measuring instrument, whereby the measuring instrument is configured to monitor the filling level of the liquid (102) in the intermediate tank (201).

10. The device (301) according to claim 9, **characterized in that**
the storage tank (101, 101a, 101 b) and the intermediate tank (201) are connected to each other via a riser (104, 104a, 104b).

11. The device (301) according to one of claims 9 or 10, **characterized in that**
the measuring instrument for monitoring the filling level of the liquid (102) in the intermediate tank is configured as a set of scales (203).

12. The device (301) according to one of claims 9 to 11, **characterized in that**
the measuring instrument is connected to an electronic unit (204) in order to evaluate measured data, whereby the measured data display filling level data for the liquid (102) in the intermediate tank (201).

13. The device (301) according to one of claims 9 to 12, **characterized in that**
the intermediate tank (201) is configured as a closed tank that has an inlet and an outlet for the liquid (102).

14. The device (301) according to one of claims 9 to 13, **characterized in that**
the device (301) has at least two storage tanks (101a, 101b), whereby the intermediate tank (201) can be filled alternately from one of the storage tanks (101a, 101b).

15. An analyzer, **characterized in that**
the analyzer has at least one device (301) to supply the analyzer with at least one liquid (102) according to claims 9 to 14.

**Revendications**

1. Procédé d'alimentation d'au moins un appareil d'analyse avec au moins un liquide (102), le liquide (102) étant mis à disposition dans au moins un réservoir (101, 101 a, 101 b), **caractérisé en ce que** le liquide (102) est transporté du réservoir (101, 101 a, 101 b) vers au moins un récipient intermédiaire (201) et **en ce que** le liquide (102) est amené à l'appareil d'analyse à partir du récipient intermédiaire (201), le récipient intermédiaire (201) étant situé au-dessus de l'appareil d'analyse et le réservoir (101, 101 a, 101 b), en dessous de l'appareil d'analyse, et **en ce qu'**un niveau de remplissage du liquide (102) dans le récipient intermédiaire (201) est surveillé.

2. Procédé selon la revendication 1, **caractérisé en ce que** le réservoir (101, 101 a, 101 b) est soumis à une pression, l'application d'une pression étant effectuée par un gaz, et **en ce que** le liquide (102) est transporté du réservoir (101, 101a, 101 b) vers le récipient intermédiaire (201) via une conduite montante (104, 104a, 104b).

3. Procédé selon l'une des revendications 1 ou 2, **ca-**

**ractérisé en ce que** le liquide (102) est mis à la disposition de l'appareil d'analyse sans pression dans le récipient intermédiaire (201).

4. Procédé selon l'une des revendications 1 à 3, **caractérisé en ce qu'**une masse du récipient intermédiaire (201) est déterminée pour surveiller le niveau de remplissage du liquide (102) dans le récipient intermédiaire (201).

5. Procédé selon l'une des revendications 1 à 4, **caractérisé en ce que** des données de mesure pour le récipient intermédiaire sont saisies et analysées par une électronique (204), les données de mesure représentant des données de niveau de remplissage pour le liquide (102) dans le récipient intermédiaire (201).

6. Procédé selon l'une des revendications 1 à 5, **caractérisé en ce que** l'électronique (204) émet un signal lorsqu'une valeur limite prédéfinie du niveau de remplissage du liquide (102) dans le récipient intermédiaire (201) est dépassée par le bas, le signal étant classé comme consigne de remplir de récipient intermédiaire (201).

7. Procédé selon l'une des revendications 1 à 6, **caractérisé en ce que** le récipient intermédiaire (201) est rempli à tour de rôle à partir d'un d'au moins deux réservoirs (101a, 101b).

8. Procédé selon la revendication 7, **caractérisé en ce que**, pendant un remplacement d'un réservoir (101 a, 101 b), le récipient intermédiaire (201) est rempli à partir de l'autre réservoir (101a, 101b).

9. Dispositif (301) pour alimenter au moins un appareil d'analyse avec au moins un liquide (102), le liquide (102) étant mis à disposition dans au moins un réservoir (101, 101 a, 101 b), **caractérisé en ce que** le dispositif (301) comporte au moins un récipient intermédiaire (201), le réservoir, une conduite montante pour le transport du liquide et une conduite de liquide pour amener le liquide, le récipient intermédiaire (201) étant situé au-dessus de l'appareil d'analyse et le réservoir (101, 101 a, 101 b), en dessous de l'appareil d'analyse, et le liquide (102) pouvant être transporté du réservoir (101, 101 a, 101 b) vers le récipient intermédiaire (201) au moyen de la conduite montante, et le liquide (102) pouvant être amené à l'appareil d'analyse à partir du récipient intermédiaire (201) au moyen de la conduite de liquide, et **en ce que** le dispositif (301) comporte un dispositif de mesure, le dispositif de mesure étant conçu pour surveiller un niveau de remplissage du liquide (102) dans le récipient intermédiaire (201).

10. Dispositif (301) selon la revendication 9, **caractérisé**

**en ce que** le réservoir (101, 101 a, 101b) et le récipient intermédiaire (201) sont reliés entre eux par l'intermédiaire d'une conduite montante (104, 104a, 104b).

11. Dispositif (301) selon l'une des revendications 9 ou 10, **caractérisé en ce que** le dispositif de mesure pour surveiller le niveau de remplissage du liquide (102) dans le récipient intermédiaire est conçu en tant que balance (203).

12. Dispositif (301) selon l'une des revendications 9 à 11, **caractérisé en ce que** le dispositif de mesure est relié à une électronique (204) pour l'évaluation de données de mesure, les données de mesure représentant des données de niveau de remplissage pour le liquide (102) dans le récipient intermédiaire (201).

13. Dispositif (301) selon l'une des revendications 9 à 12, **caractérisé en ce que** le récipient intermédiaire (201) est réalisé en tant que récipient fermé qui comporte respectivement au moins une entrée et une sortie pour le liquide (102).

14. Dispositif (301) selon l'une des revendications 9 à 13, **caractérisé en ce que** le dispositif (301) comporte au moins deux réservoirs (101 a, 101b), le récipient intermédiaire (201) pouvant être rempli à tour de rôle à partir de respectivement l'un des réservoirs (101a, 101b).

15. Appareil d'analyse, **caractérisé en ce que** l'appareil d'analyse comporte au moins un dispositif (301) pour alimenter l'appareil d'analyse avec au moins un liquide (102) selon les revendications 9 à 14.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1376121 A1
- DE 102007058718 A1